# EUROPEAN PATENT SPECIFICATION

(11) **EP 4 064 669 B1**
(45) Date of publication and mention of the grant of the patent: **01.04.2026**
(21) Application number: 21194271.9
(22) Date of filing: 01.09.2021
(51) Int. Cl.: H04N 1/00, H04N 1/32, G06Q 10/10, G06F 16/16, G06F 3/0481

(54) **INFORMATION PROCESSING APPARATUS, INFORMATION PROCESSING PROGRAM, AND INFORMATION PROCESSING METHOD**
INFORMATIONSVERARBEITUNGSVORRICHTUNG, INFORMATIONSVERARBEITUNGSPROGRAMM UND INFORMATIONSVERARBEITUNGSVERFAHREN
APPAREIL DE TRAITEMENT D'INFORMATIONS, PROCÉDÉ DE TRAITEMENT D'INFORMATIONS ET PROGRAMME DE TRAITEMENT D'INFORMATIONS

(30) Priority: 23.03.2021 JP 2021048744
(43) Date of publication of application: 28.09.2022
(73) Proprietor: FUJIFILM Business Innovation Corp., Minato-ku Tokyo (JP)
(72) Inventor: MIHARA, Makoto, Yokohama-shi (JP); HASUIKE, Kimitake, Yokohama-shi (JP); IKEDA, Eriko, Yokohama-shi (JP); ISHIHARA, Ayaka, Yokohama-shi (JP)
(74) Representative: Becker, Eberhard

(56) References cited:
- WO-A2-2006/073859
- US-A1- 2014 359 465
- US-A1- 2021 004 434

## Description

### BACKGROUND OF THE INVENTION

### (i) Field of the Invention

The present invention relates to an information processing apparatus, an information processing program, and an information processing method.

### (ii) Description of Related Art

JP2000-339249A discloses a technique for providing a method for managing an electronic file so that a message, which is a matter to be transmitted, can be attached to the electronic file.
US 2021/004434 A1 discloses methods and systems for enhancing design collaboration using design-based feedback. An indication to provide feedback in accordance with a graphical design element within a document is received. Text-based feedback related to the graphical design element within the document is obtained, and design-based feedback that manipulates the graphical design element within the document is obtained. Thereafter, a feedback indicator is generated that indicates the text-based feedback and the design-based feedback related to the graphical design element.
US 2014/359465 A1 discloses a method and apparatus for sharing electronic documents and sharing annotations to the same. User interface elements are provided to assist users in accessing shared files and folders as well as indications to alert the users to updates in the condition of a shared item. The user interface also permits sharing of comments relating to content.
WO 2006/073859 A2 discloses a method and system for utilizing embedded icons into an original digital picture employing an image file to store the icons as well as metadata associated with the icons. The marker section of the image file includes the original digital picture as well as the metadata relating to the icon itself as well as the embedded data associated with each of the icons. The image file is sent to receivers using any appropriate protocol.

### SUMMARY OF THE INVENTION

In the related art, there is a technique capable of transmitting a file with a message attached to a recipient of the file in order to clearly indicate the work contents for the file.

However, in the above technique, a plurality of files received by a recipient may or may not have a message attached. In this case, in order for a recipient to find a file that requires work from among a plurality of files, for example, it is desirable to be able to grasp at a glance whether or not a message is attached from the display contents of the screen.

The present invention is provided by the appended claims. The following disclosure serves a better understanding of the present invention. Therefore, an object of the present disclosure is to make a recipient grasp whether or not a message is attached to a transmitted file and the message on one screen in a case of transmitting and receiving the file to which the message can be attached.

According to a first aspect of the present disclosure, there is provided an information processing apparatus including a processor configured to: in a case where a message is attached to a file transmitted by one user to another user, display a first image showing the file and a second image showing that the message is attached to the file in association with each other; and in a case where a selection of the second image is received, display the message.

According to a second aspect of the present disclosure, there is provided an information processing apparatus, in the information processing apparatus according to the first aspect, the processor may be configured to: in a case where an attachment of a plurality of the messages to the file is received and the selection of the second image is received, display the message with the latest reception time.

According to a third aspect of the present disclosure, there is provided an information processing apparatus, in the information processing apparatus according to the second aspect, the processor may be configured to: in a case where the attachment of the plurality of messages to the file is received, hold all the received messages; and display all the received messages for the file on a predetermined screen.

According to a fourth aspect of the present disclosure, there is provided an information processing apparatus, in the information processing apparatus according to any one of the first to third aspects, the processor may be configured to: display the second image on a plurality of screens; and make a display mode of the second image on the plurality of screens common.

According to a fifth aspect of the present disclosure, there is provided an information processing apparatus, in the information processing apparatus according to the fourth aspect, the plurality of screens may include an edit screen capable of editing the file.

According to a sixth aspect of the present disclosure, there is provided an information processing apparatus, in the information processing apparatus according to the fifth aspect, the processor may be configured to: in a case where the edit screen is displayed, display the message.

According to a seventh aspect of the present disclosure, there is provided an information processing apparatus, in the information processing apparatus according to any one of the first to sixth aspects, the processor may be configured to, in a case where the selection of the second image is received, display the message at a position that does not overlap the first image.

According to an eighth aspect of the present disclosure, there is provided an information processing program causing a computer to execute a process including displaying, in a case where a message is attached to a file transmitted by one user to another user, a first image showing the file and a second image showing that the message is attached to the file in association with each other, and displaying the message in a case where a selection of the second image is received.

According to a ninth aspect of the present disclosure, there is provided an information processing method including displaying, in a case where a message is attached to a file transmitted by one user to another user, a first image showing the file and a second image showing that the message is attached to the file in association with each other, and displaying the message in a case where a selection of the second image is received.

According to the first aspect, it is possible to make a recipient grasp whether or not a message is attached to a transmitted file and the message on one screen in a case of transmitting and receiving the file to which the message can be attached.

According to the second aspect, in a case where a plurality of messages are attached to the file, it is possible to make a recipient grasp the message with the latest reception time in preference to the other messages.

According to the third aspect, it is possible to make a recipient grasp all the received messages on a predetermined screen.

According to the fourth aspect, it is possible to easily make a recipient grasp whether or not a message is attached to the transmitted file, as compared with the configuration in which the display mode of the second image on the plurality of screens is different.

According to the fifth aspect, it is possible to allow a recipient to edit the file while confirming the message for the transmitted file.

According to the sixth aspect, the message is displayed on the edit screen even though the selection of the second image is not received.

According to the seventh aspect, the deterioration of the visibility of the file indicated by the first image is suppressed as compared with the configuration in which the message is displayed at a position that overlaps the first image.

According to the eighth aspect, it is possible to make a recipient grasp whether or not a message is attached to a transmitted file and the message on one screen in a case of transmitting and receiving the file to which the message can be attached.

According to the ninth aspect, it is possible to make a recipient grasp whether or not a message is attached to a transmitted file and the message on one screen in a case of transmitting and receiving the file to which the message can be attached.

### BRIEF DESCRIPTION OF THE DRAWINGS

Exemplary embodiment(s) of the present invention will be described in detail based on the following figures, wherein:

Fig. 1 is a diagram showing a schematic configuration of an information processing system;
Fig. 2 is a block diagram showing a hardware configuration of an information processing apparatus;
Fig. 3 is a first display example of the information processing system;
Fig. 4 is a second display example of the information processing system;
Fig. 5 is a third display example of the information processing system;
Fig. 6 is a fourth display example of the information processing system;
Fig. 7 is a fifth display example of the information processing system;
Fig. 8 is a sixth display example of the information processing system;
Fig. 9 is a flowchart showing a flow of display processing by the information processing apparatus;
Fig. 10 is a seventh display example of the information processing system;
Fig. 11 is an eighth display example of the information processing system;
Fig. 12 is a ninth display example of the information processing system;
Fig. 13 is a tenth display example of the information processing system;
Fig. 14 is an eleventh display example of the information processing system;
Fig. 15 is a twelfth display example of the information processing system;
Fig. 16 is a thirteenth display example of the information processing system;
Fig. 17 is a fourteenth display example of the information processing system;
Fig. 18 is a fifteenth display example of the information processing system;
Fig. 19 is a sixteenth display example of the information processing system;
Fig. 20 is a seventeenth display example of the information processing system;
Fig. 21 is an eighteenth display example of the information processing system;
Fig. 22 is a nineteenth display example of the information processing system;
Fig. 23 is a twentieth display example of the information processing system;
Fig. 24 is a twenty-first display example of the information processing system;
Fig. 25 is a twenty-second display example of the information processing system;
Fig. 26 is a twenty-third display example of the information processing system; and
Fig. 27 is a twenty-fourth display example of the information processing system.

### DETAILED DESCRIPTION OF THE INVENTION

Hereinafter, an information processing system 10 according to the present exemplary embodiment will be described.

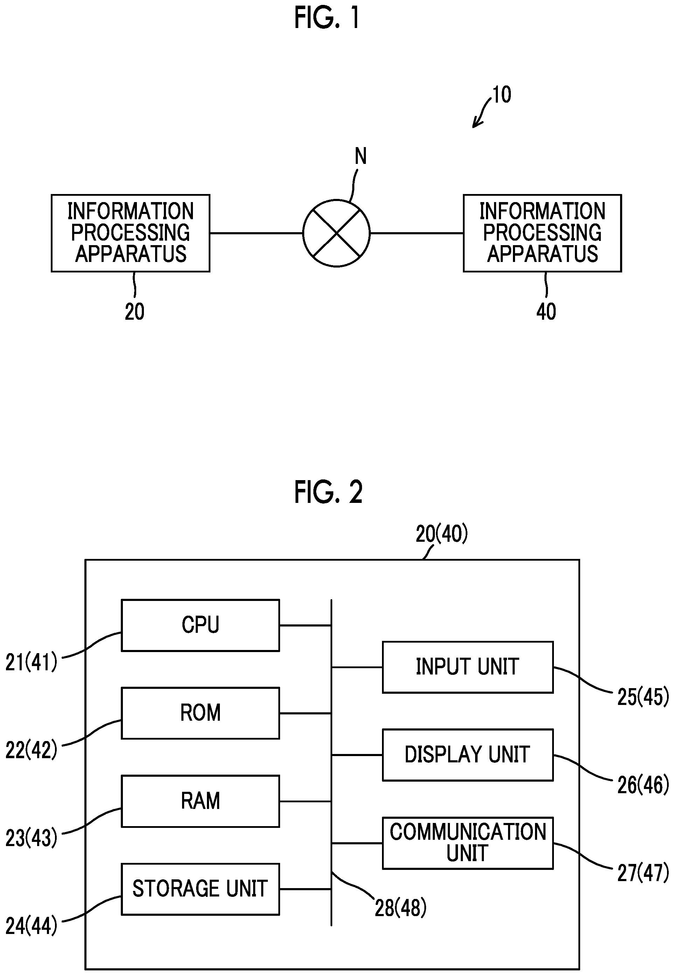

Fig. 1 is a diagram showing a schematic configuration of the information processing system 10.

As shown in Fig. 1, the information processing system 10 includes an information processing apparatus 20 and an information processing apparatus 40. The information processing apparatus 20 and the information processing apparatus 40 are connected to each other via a network N so that the information processing apparatuses can communicate with each other. As an example, the Internet, a local area network (LAN), a wide area network (WAN), and the like are applied to this network N. In Fig. 1, the information processing system 10 is configured by two apparatuses, the information processing apparatus 20 and the information processing apparatus 40, but is not limited thereto, and the information processing system 10 may be configured by three or more apparatuses.

The information processing apparatus 20 and the information processing apparatus 40 transmit and receive a file to which a message can be attached in the information processing system 10. A file is, for example, an electronic version of paper documents such as a "quotation", "invoice", "purchase order", "delivery note", and "receipt". A message is text information that can be attached to the file, and includes, for example, information transmission matters to a destination of the file.

Fig. 2 is a block diagram showing a hardware configuration of the information processing apparatus 20 and the information processing apparatus 40. As an example, a general-purpose computer device such as a server computer or a personal computer, or a mobile terminal such as a smartphone or a tablet terminal is applied to the information processing apparatus 20 and the information processing apparatus 40. In the present exemplary embodiment, the information processing apparatus 20 and the information processing apparatus 40 are referred to as a "personal computer". Since the information processing apparatus 20 and the information processing apparatus 40 basically have a general computer configuration, the information processing apparatus 20 will be described as a representative.

As shown in Fig. 2, the information processing apparatus 20 includes a central processing unit (CPU) 21, a read only memory (ROM) 22, a random access memory (RAM) 23, a storage unit 24, an input unit 25, a display unit 26, and a communication unit 27. Each configuration is communicably connected to each other via a bus 28. The CPU 21 is an example of a "processor".

The CPU 21 is a central arithmetic processing unit that executes various programs and controls each unit. That is, the CPU 21 reads the program from the ROM 22 or the storage unit 24, and executes the program using the RAM 23 as a work area. The CPU 21 controls each of the above configurations and performs various arithmetic processes according to the program stored in the ROM 22 or the storage unit 24. In the present exemplary embodiment, the ROM 22 or the storage unit 24 stores at least an information processing program for executing display processing described later. The information processing program may be pre-installed in the information processing apparatus 20, or may be stored in a non-volatile storage medium or distributed via the network N to be appropriately installed in the information processing apparatus 20. Examples of the non-volatile storage medium include a CD-ROM, a magneto-optical disc, a hard disk drive (HDD), a DVD-ROM, a flash memory, a memory card, and the like.

The ROM 22 stores various programs and various data. The RAM 23 temporarily stores a program or data as a work area.

The storage unit 24 is configured by a storage device such as an HDD, a solid state drive (SSD), or a flash memory, and stores various programs including an operating system and various data.

As an example, the input unit 25 includes a pointing device such as a mouse, various buttons, a keyboard, a microphone, a camera, and the like, and is used for performing various inputs.

As an example, the display unit 26 is a liquid crystal display and displays various types of information. The display unit 26 may employ a touch panel method and serve as the input unit 25.

The communication unit 27 is an interface for communicating with other devices. For the communication, for example, a wired communication standard such as Ethernet (registered trademark) or FDDI, or a wireless communication standard such as 4G, 5G, or Wi-Fi (registered trademark) is used.

When executing the above information processing program, the information processing apparatus 20 uses the above hardware resources to execute processing based on the information processing program.

Next, in the information processing system 10, a flow in which a file to which a message can be attached is transmitted will be described. In the following, as an example, a case where a user A who is a user of the information processing apparatus 20 transmits a file will be described by way of an example.

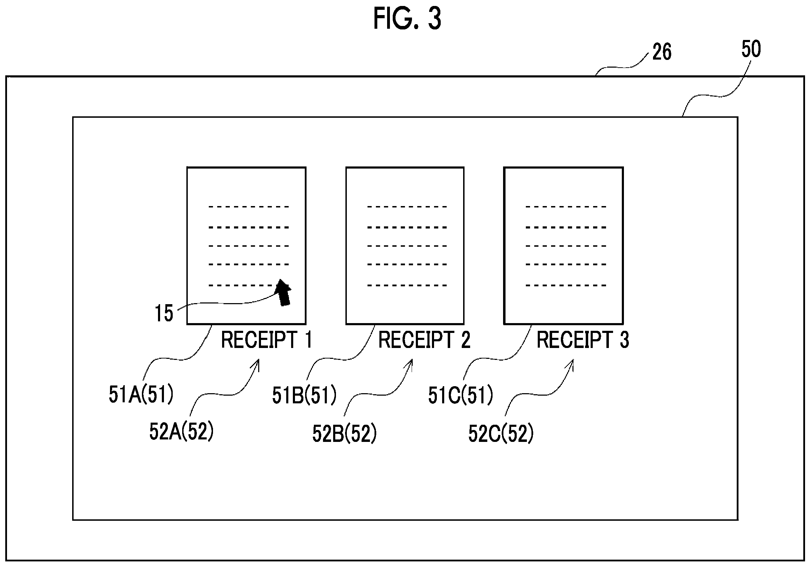

Fig. 3 is a first display example of the information processing system 10. The CPU 21 causes the display unit 26 of the information processing apparatus 20 to display a display example shown in Fig. 3 in a case where a predetermined first application is executed. The first application is an application that reproduces a paper document such as a "quotation", "invoice", "purchase order", "delivery note", and "receipt" and an object existing on an office desk such as a tray and a bookshelf for storing the paper document. In the present exemplary embodiment, it is assumed that the first application is pre-installed in the apparatus constituting the information processing system 10.

The display example shown in Fig. 3 shows a list screen 50 in which a file, a virtual tray for storing the file, a virtual bookshelf, and the like are displayed in a list. On the initial screen of the list screen 50, a "personal area" which is a personal work area provided for each user is displayed. As an example, the personal area of the user A is displayed on the list screen 50 shown in Fig. 3, and thumbnail images 51A, 51B, and 51C showing the contents of one page of the file stored in the personal area, and file name displays 52A, 52B, and 52C indicating the file names corresponding to the thumbnail images 51 are displayed. Further, on the thumbnail image 51A, a mouse pointer 15 pointing on the display unit 26 is displayed in accordance with the operation of the mouse as the input unit 25.

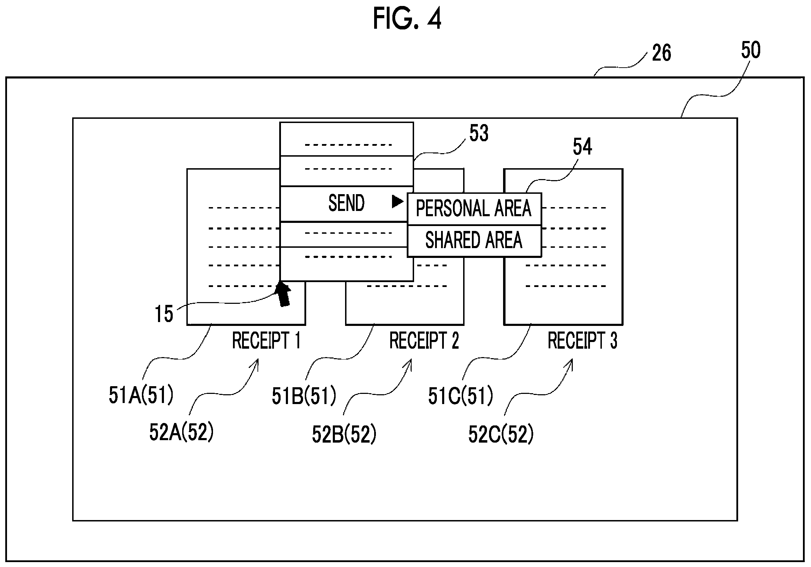

Fig. 4 is a second display example of the information processing system 10. The display example shown in Fig. 4 shows a state after the mouse is right-clicked while the display example shown in Fig. 3 is being displayed.

On the list screen 50 shown in Fig. 4, in addition to the display contents in Fig. 3, a context menu 53 and a submenu 54 are displayed.

The context menu 53 shown in Fig. 4 is displayed in a case where the mouse is right-clicked on the thumbnail image 51A, and shows a plurality of menus that can be executed for the thumbnail image 51.

The submenu 54 shown in Fig. 4 is displayed in a case where the mouse is left-clicked on a "send" menu of the context menu 53, and shows a plurality of destinations to which a file can be transmitted in the "send" menu. In the present exemplary embodiment, as the above-mentioned "plurality of destinations", a "personal area" which is a personal work area provided for each user and a "shared area" which is a work area shared by a plurality of users" are provided.

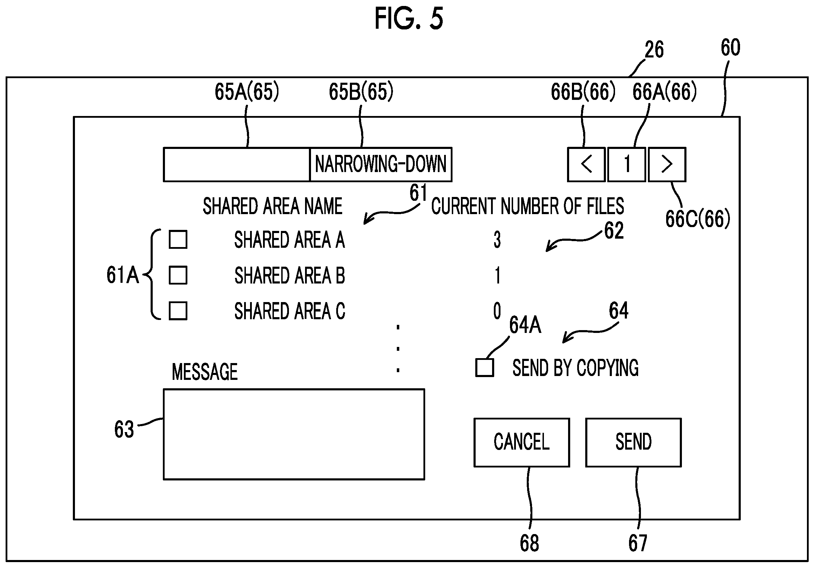

Fig. 5 is a third display example of the information processing system 10. The display example shown in Fig. 5 shows a state after the "shared area" menu of the submenu 54 is left-clicked with the mouse while the display example shown in Fig. 4 is being displayed.

The display example shown in Fig. 5 shows a selection screen 60 for selecting a destination of the file. On the selection screen 60 shown in Fig. 5, a destination selection section 61, a number-of-files display section 62, a message input section 63, a copy selection section 64, a narrowing-down section 65, a page switching section 66, a send button 67, and a cancel button 68 are displayed.

The destination selection section 61 is a part that selects the destination of a file. In the destination selection section 61 shown in Fig. 5, a plurality of candidates including a shared area A, a shared area B, and a shared area C are displayed as an example of the candidate of the destination. Further, on the left side of the plurality of candidates, a check box 61A for receiving a selection of one candidate from among the plurality of candidates is displayed. That is, in the present exemplary embodiment, it is not possible to select a plurality of destinations as the destinations of the file.

The number-of-files display section 62 is a part that displays the number of files stored in each of the plurality of candidates for the destination of the file displayed in the destination selection section 61. The number-of-files display section 62 shown in Fig. 5 shows, as an example, that the number of files in the shared area A is "3", the number of files in the shared area B is "1", and the number of files in the shared area C is "0". Accordingly, the number of files stored in each shared area can be known, and the retention state of the files can be grasped.

The message input section 63 is a part that inputs a message to be attached to a file. In the present exemplary embodiment, as an example, a message can be input by operating the keyboard after the inside of the rectangular frame of the message input section 63 is left-clicked with the mouse.

The copy selection section 64 is a part that can select copy and transmission of a file. The copy selection section 64 is provided with a check box 64A, and in a case where a check mark is added to the check box 64A, the file is transmitted by copying. In the initial setting of the copy selection section 64, the check mark is not added to the check box 64A and the original of the file is transmitted.

The narrowing-down section 65 is a part that narrows down the candidates for the destination of the file displayed on the destination selection section 61. The narrowing-down section 65 includes a narrowing-down condition input section 65A that receives input of a narrowing-down condition that narrows down the candidates for the destination, and an execution section 65B that executes the narrowing-down. In the present exemplary embodiment, as an example, a narrowing-down condition can be input by operating the keyboard after the inside of the rectangular frame of the narrowing-down condition input section 65A is left-clicked with the mouse. Then, in the present exemplary embodiment, the narrowing-down is executed in a case where the execution section 65B is left-clicked with the mouse while the narrowing-down condition is input to the narrowing-down condition input section 65A.

The page switching section 66 is a part that switches the candidates for the destination of the file displayed on the destination selection section 61. The page switching section 66 includes a number-of-pages display section 66A that displays the current number of pages, a previous page switching section 66B that switches the page displayed on the number-of-pages display section 66A to the previous page, and a next page switching section 66C that switches the page displayed on the number-of-pages display section 66A to the next page. In the present exemplary embodiment, as an example, page switching is executed in a case where the previous page switching section 66B or the next page switching section 66C is left-clicked with the mouse.

The send button 67 is a part for transmitting a file to a destination with a check mark in the check box 61A of the destination selection section 61. The send button 67 can be operated after a check mark is added to any check box 61A.

The cancel button 68 is a part for changing the display content of the display unit 26 to the list screen 50.

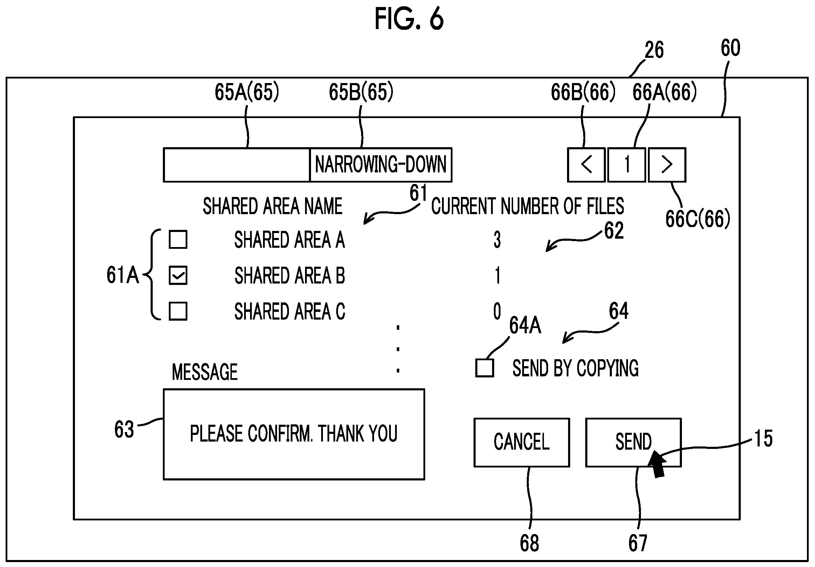

Fig. 6 is a fourth display example of the information processing system 10. The display example shown in Fig. 6 shows a state after a check mark is added to the check box 61A of the destination selection section 61 and a message is input to the message input section 63 while the display example shown in Fig. 5 is being displayed.

In the destination selection section 61 shown in Fig. 6, a check mark is added to the check box 61A corresponding to the shared area B.

In the message input section 63 shown in Fig. 6, the message "Please confirm. Thank you" is input as an example.

Further, in the selection screen 60 shown in Fig. 6, the mouse pointer 15 is displayed on the send button 67.

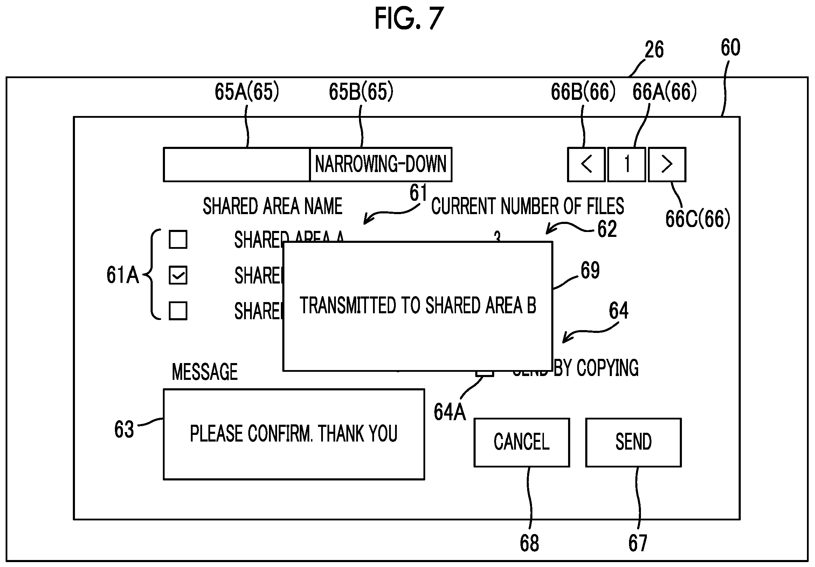

Fig. 7 is a fifth display example of the information processing system 10. The display example shown in Fig. 7 shows a state after the send button 67 is left-clicked with the mouse while the display example shown in Fig. 6 is being displayed.

On the selection screen 60 shown in Fig. 7, in addition to the display contents in Fig. 6, a result display section 69 showing a result of the processing after the operation of the send button 67 is displayed in the center of the selection screen 60.

As an example, the text "Transmitted to shared area B" is displayed on the result display section 69 shown in Fig. 7, indicating that the file transmission has succeeded. In the present exemplary embodiment, in a case where the file transmission has succeeded, the destination to which the file is transmitted is displayed on the result display section 69.

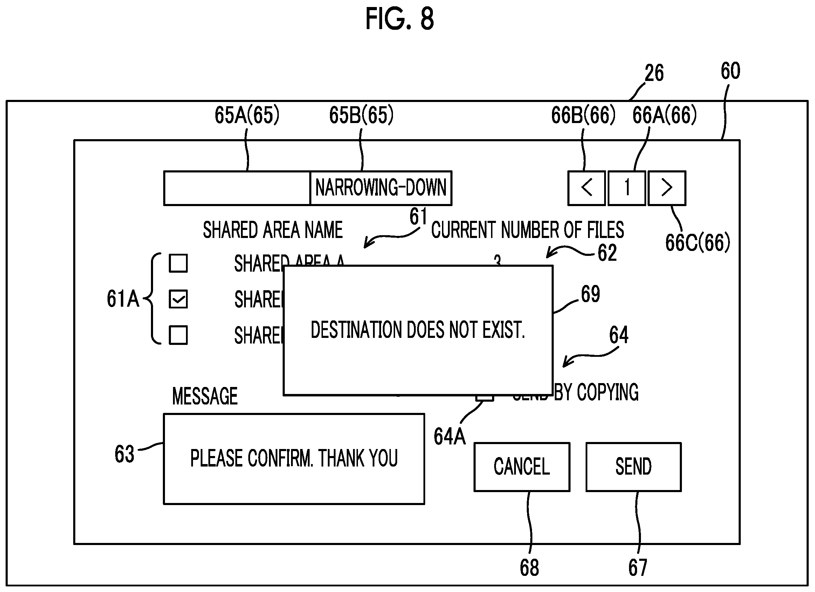

Fig. 8 is a sixth display example of the information processing system 10. The display example shown in Fig. 8 shows a state after the send button 67 is left-clicked with the mouse while the display example shown in Fig. 6 is being displayed.

On the selection screen 60 shown in Fig. 8, in addition to the display contents in Fig. 6, a result display section 69 is displayed in the center of the selection screen 60.

As an example, the text "Destination does not exist" is displayed on the result display section 69 shown in Fig. 8, indicating that the file transmission has failed. In the present exemplary embodiment, in a case where the file transmission has failed, the cause of the failure is displayed on the result display section 69. In the case shown in Fig. 8, since the shared area B was deleted immediately before the file was transmitted to the shared area B, the text "Destination does not exist" is displayed. In addition, as cases where file transmission fails, "a case where the destination has reached the upper limit of the number of files", "a case where the usage authority in the shared area of the destination has been extinguished immediately before the file is transmitted", "a case where the file to be transmitted is deleted immediately before the file is transmitted", and the like are assumed. Then, texts such as "The upper limit of the number of files (example: 10) has been reached. Delete unnecessary files and try again" in a case where the destination has reached the upper limit of the number of files, "The destination cannot be accessed" in a case where the usage authority in the shared area of the destination has been extinguished immediately before the file is transmitted, and "The file does not exist" in a case where the file to be transmitted is deleted immediately before the file is transmitted" may be displayed on the result display section 69.

Next, in the information processing system 10, a flow in which the received file is displayed will be described. In the following, as an example, a case where the file received by a user B who is a user of the information processing apparatus 40 is displayed will be described by way of an example.

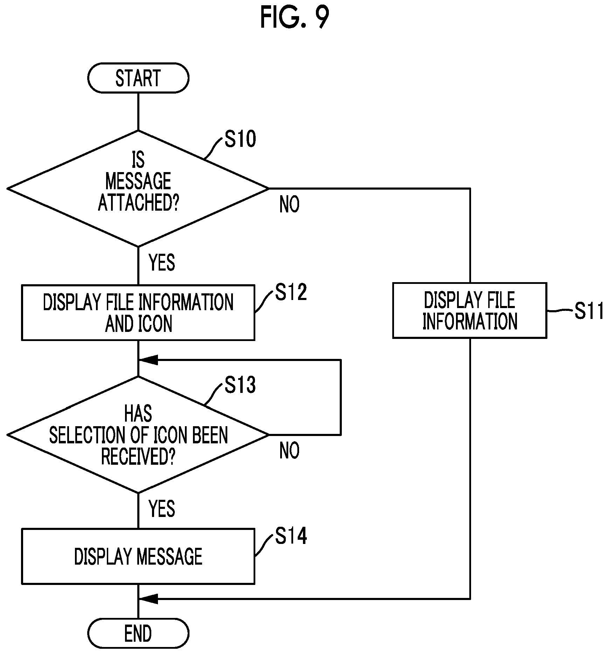

Fig. 9 is a flowchart showing a flow of display processing for displaying the received file. A CPU 41, which is an example of the "processor", reads an information processing program from a ROM 42 or a storage unit 44, loads the program into a RAM 43, and executes the program, and thereby the information processing apparatus 40 performs display processing.

In step S10 shown in Fig. 9, the CPU 41 determines whether or not a message is attached to the received file, and in a case where it is determined that the message is attached (step S10: YES), the process proceeds to step S12. On the other hand, in a case where the CPU 41 determines that the message is not attached (step S10: NO), the process proceeds to step S11.

In step S11, the CPU 41 causes a display unit 46 to display file information indicating the received file. Then, the processing is ended. A display example of file information, which is an example of the "first image", will be described later.

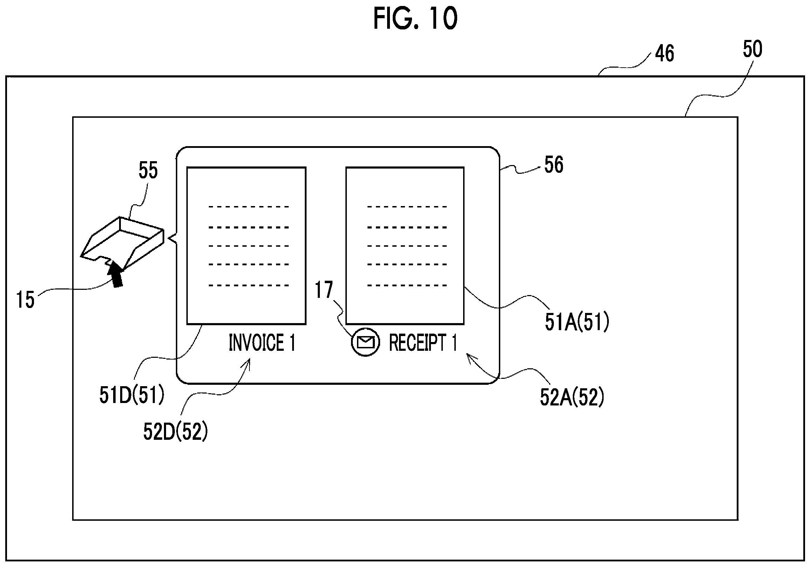

In step S12, the CPU 41 causes the display unit 46 to display the file information and an icon 17 (see Fig. 10) indicating that the message is attached to the received file. Then, the process proceeds to step S13. A display example of the icon 17, which is an example of the "second image", will be described later.

In step S13, the CPU 41 determines whether or not the selection of the icon 17 displayed on the display unit 46 has been received, and in a case where it is determined that the selection of the icon 17 has been received (step S13: YES), the process proceeds to step S14. On the other hand, in a case where the CPU 41 determines that the selection of the icon 17 has not been received (step S13: NO), the process waits until the selection of the icon 17 is received.

In step S14, the CPU 41 causes the display unit 46 to display the message attached to the file. Then, the processing is ended.

Hereinafter, as an example, a display example in a case where the user B, who is the user of the information processing apparatus 40, displays the file transmitted to the shared area B by the user A on the selection screen 60 shown in Fig. 6 will be described. The CPU 41 causes the display unit 46 to display the display example described below in the corresponding step of the flowchart shown in Fig. 9 above.

Fig. 10 is a seventh display example of the information processing system 10. In a case where the CPU 41 receives an instruction to display the shared area B on the list screen 50 of the user B after the first application is executed, the CPU 41 causes the display unit 46 of the information processing apparatus 40 to display the display example shown in Fig. 10. As an example, the shared area B is displayed on the list screen 50 shown in Fig. 10, and a virtual tray 55 provided in the shared area B is displayed. In the virtual tray 55, a plurality of types of files such as an electronic paper document and a file generated by executing a specific application can be collectively stored.

The list screen 50 shown in Fig. 10 shows the state after the mouse pointer 15 is displayed on the virtual tray 55 and the mouse is left-clicked on the virtual tray 55. In the present exemplary embodiment, in a case where the mouse is left-clicked on the virtual tray 55, a balloon 56 for displaying file information or the like indicating a file stored in the virtual tray 55 is displayed.

In the balloon 56, as file information, thumbnail images 51A and 51D showing the contents of one page of the file stored in the virtual tray 55, and file name displays 52A and 52D indicating the file names corresponding to the thumbnail images 51 are displayed. As described above, in the present exemplary embodiment, the file information is information that can identify the contents of the file.

Further, an icon 17 indicating that a message is attached to the file is displayed below the thumbnail image 51A and on the left side of the file name display 52A. The icon 17 has a display mode in which an envelope mark is displayed in a round frame.

In the present exemplary embodiment, the file information and the icon 17 are displayed in association with each other. Here, the above-mentioned "displayed in association with each other" is to display the relationship between the file information and the icon 17 so as to be identifiable. In the present exemplary embodiment, the relationship between the file information and the icon 17 is shown by displaying the file information and the icon 17 in the identical screen (example: list screen 50) displayed during the execution of the first application. Further, in the present exemplary embodiment, in a case where a plurality of file information are displayed in the identical screen as described above, by displaying the icon 17 in close proximity to one file information (example: thumbnail image 51A), it is shown that the icon 17 is associated with the one file information.

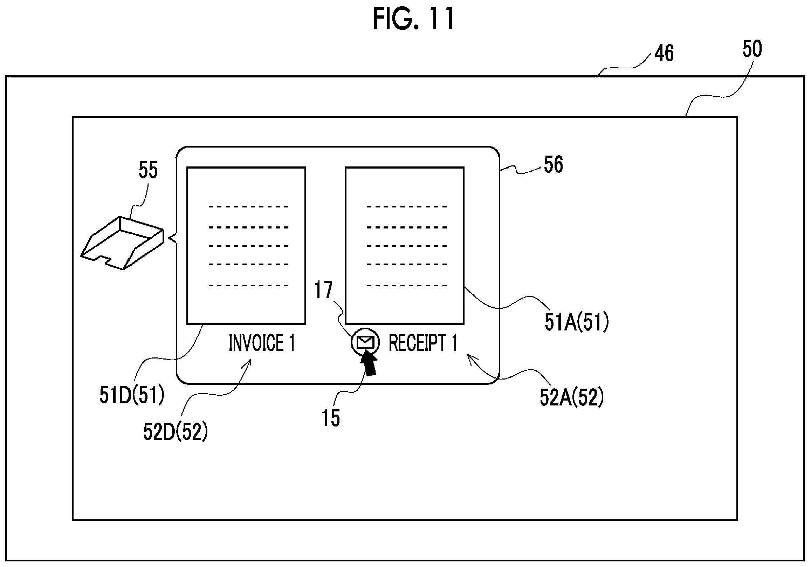

Fig. 11 is an eighth display example of the information processing system 10. The display example shown in Fig. 11 shows a state after the position of the mouse pointer 15 is moved from the display example shown in Fig. 10. In the list screen 50 shown in Fig. 11, the mouse pointer 15 is displayed on the icon 17.

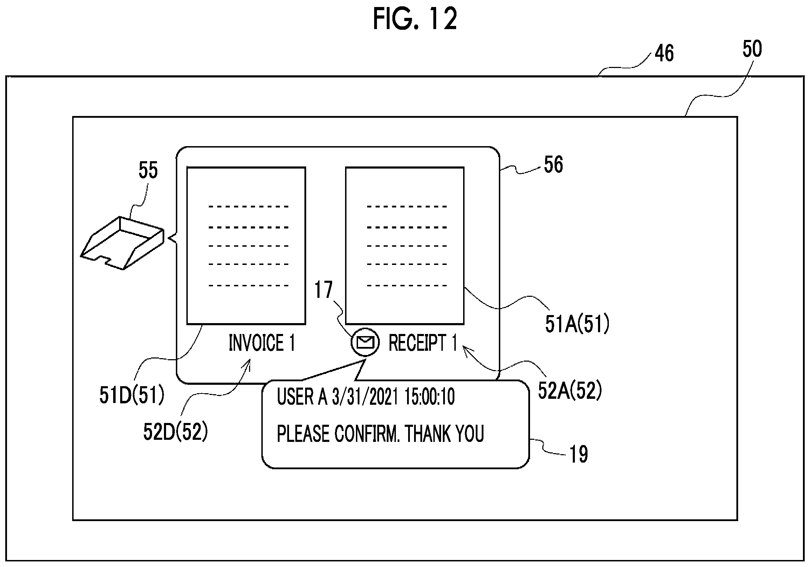

Fig. 12 is a ninth display example of the information processing system 10. The display example shown in Fig. 12 shows a state after the icon 17 is left-clicked with the mouse while the display example shown in Fig. 11 is being displayed.

On the list screen 50 shown in Fig. 12, in addition to the display contents in Fig. 11, a message display section 19 indicating a message attached to the file is displayed below the icon 17. As an example, the message display section 19 displays the texts "User A 3/31/2021 15:00:10 Please confirm. Thank you". In the present exemplary embodiment, the message display section 19 displays a user name of the message transmission source, a transmission date and time of the message, and the message body. Note that the message is not limited to being displayed when the mouse is left-clicked on the icon 17, but the message may be displayed when the mouse pointer 15 is moved on the icon 17, that is, when the mouse is over.

In the related art, there is a technique capable of transmitting a file with a message attached to a recipient of the file in order to clearly indicate the work contents for the file.

However, in the technique of the related art, a plurality of files received by a recipient may or may not have a message attached. In this case, in order for a recipient to find a file that requires work from among a plurality of files, for example, it is desirable to be able to grasp at a glance whether or not a message is attached from the display contents of the screen.

Therefore, in the present exemplary embodiment, in a case where a message is attached to a file transmitted by one user to another user, the CPUs 21 and 41 display the file information indicating the file and the icon 17 indicating that the message is attached to the file in association with each other. Then, the CPUs 21 and 41 display a message in a case where the selection of the icon 17 is received. Accordingly, in the present exemplary embodiment, of the plurality of files received by a recipient, the icon 17 is displayed for a file with the attachment of the message, and the icon 17 is not displayed for a file without the attachment of the message.

With the above configuration, according to the present exemplary embodiment, it is possible to make a recipient grasp whether or not a message is attached to a transmitted file and the message on one screen in a case of transmitting and receiving the file to which the message can be attached. Here, the above-mentioned "one screen" refers to the identical screen displayed during the execution of the first application. As an example, the list screen 50 shown in Figs. 10 to 12 corresponds to the above "one screen". On the other hand, a screen displayed by executing an application different from the first application is a "separate screen" as opposed to the above "one screen".

Then, in the present exemplary embodiment, since whether or not the message is attached and the message are displayed on one screen without executing an application different from the first application, as compared with the configuration in which whether or not the message is attached and the message are displayed on a separate screen, the time required for the recipient to grasp whether or not the message is attached and the message is shortened.

Further, in the present exemplary embodiment, in a case where the selection of the icon 17 is received, the CPUs 21 and 41 display a message at a position that does not overlap the file information (see Fig. 12). Therefore, according to the present exemplary embodiment, the deterioration of the visibility of the file indicated by the file information is suppressed as compared with the configuration in which the message is displayed at a position that overlaps the file information.

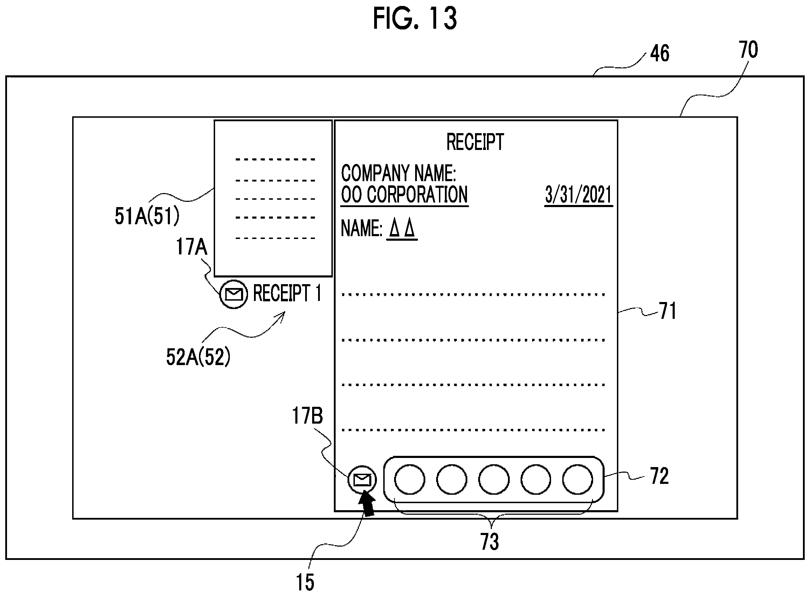

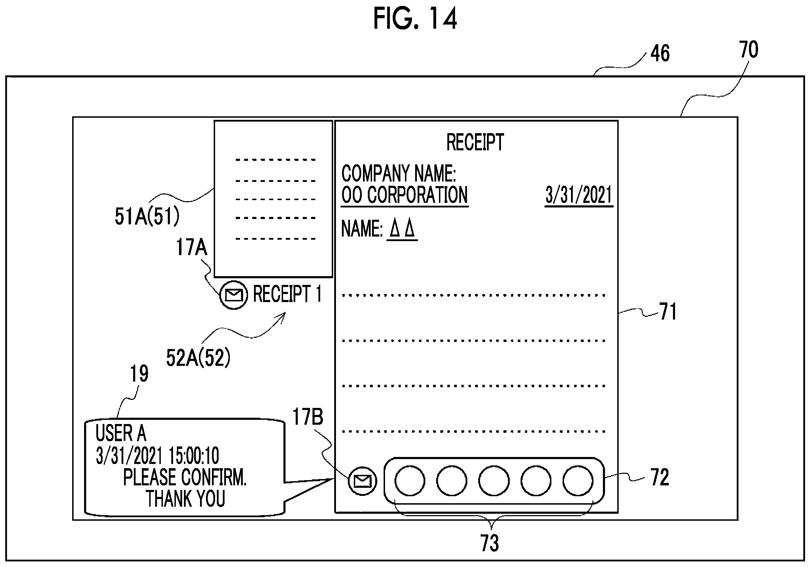

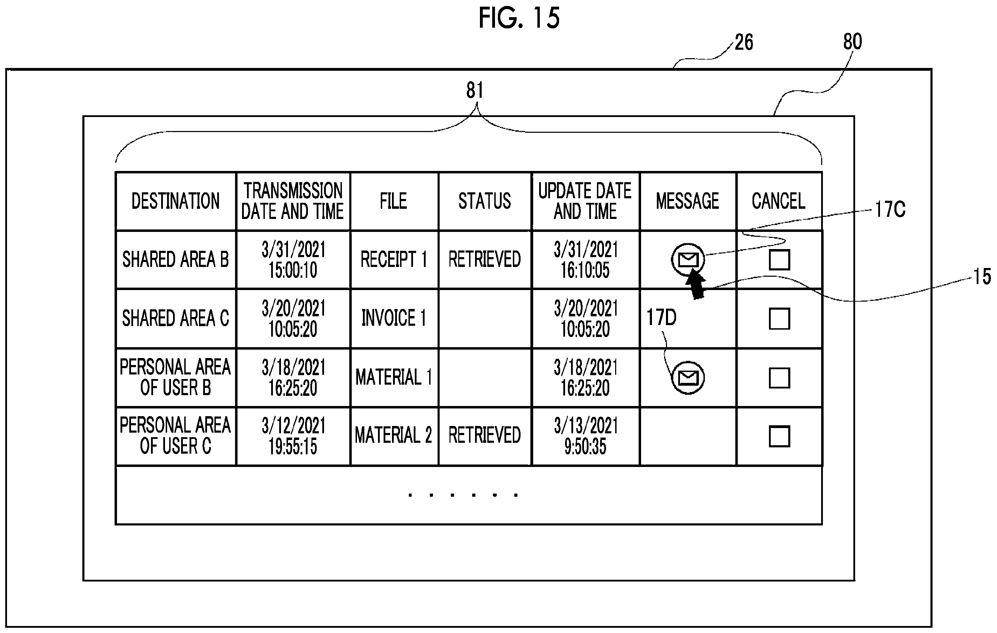

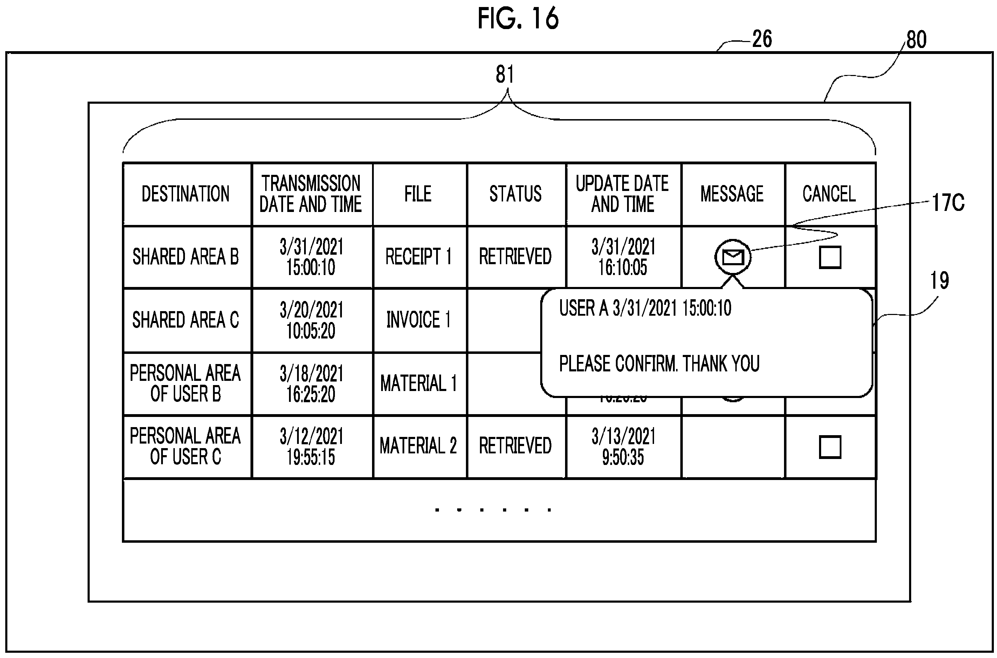

Further, in the present exemplary embodiment, the CPUs 21 and 41 display the icon 17 on a plurality of screens, and make a display mode of the icon 17 on the plurality of screens common. Here, in the present exemplary embodiment, the above list screen 50, an edit screen 70 in which files can be edited (see Figs. 13 and 14), and a history screen 80 showing the history of transmitted files (see Figs. 15 and 16) are included in the plurality of screens.

Hereinafter, as an example, an edit screen 70 in which the user B, who is a user of the information processing apparatus 40, can edit the file "receipt 1" transmitted to the shared area B by the user A on the selection screen 60 shown in Fig. 6 will be described.

Fig. 13 is a tenth display example of the information processing system 10. The display example shown in Fig. 13 shows a state after the left mouse button is double-clicked on the thumbnail image 51A while the display example shown in Fig. 12 is being displayed. In the present exemplary embodiment, in a case where the left mouse button is double-clicked on any of the thumbnail images 51 on the list screen 50 displayed by executing the first application, a second application different from the first application is executed and the edit screen 70 is displayed. The second application is an application capable of editing the file indicated by the thumbnail image 51 displayed on the list screen 50. In the present exemplary embodiment, it is assumed that the second application is pre-installed in the apparatus constituting the information processing system 10.

On the edit screen 70 shown in Fig. 13, as file information, a file name display 52A indicating a thumbnail image 51A and a file name corresponding to the thumbnail image 51A, and an enlarged display 71 inwhich the thumbnail image 51A is enlarged are displayed. An icon 17A is displayed below the thumbnail image 51A and on the left side of the file name display 52A.

In the enlarged display 71, the text of the file having the same contents as the thumbnail image 51A is displayed, and an edit section 72 having a plurality of edit buttons 73 capable of executing various editing works are displayed at the lower part of the enlarged display 71. Further, an icon 17B is displayed on the left side of the edit section 72 in the enlarged display 71, and the mouse pointer 15 is displayed on the icon 17B.

Fig. 14 is an eleventh display example of the information processing system 10. The display example shown in Fig. 14 shows a state after the mouse is left-clicked on the icon 17B while the display example shown in Fig. 13 is being displayed. On the edit screen 70 shown in Fig. 14, in addition to the display contents in Fig. 13, a message display section 19 is displayed on the left side of the icon 17B. Similar to the list screen 50 shown in Fig. 12, the message display section 19 displays the texts "User A 3/31/2021 15:00:10 Please confirm. Thank you".

According to the present exemplary embodiment, by displaying the message attached to the file on the edit screen 70, it is possible to allow a recipient to edit the file while confirming the message for the transmitted file.

Further, in the present exemplary embodiment, when the edit screen 70 is displayed, the message may be continuously displayed while the edit screen 70 is being displayed, even though the selection of the icon 17 is not received. That is, in the present exemplary embodiment, the message is continuously displayed on the edit screen 70 until the edit screen 70 is no longer displayed on the display units 26 and 46. Therefore, according to the present exemplary embodiment, when the edit screen 70 is displayed, the recipient can efficiently edit the file while confirming the message.

Next, as an example, a history screen 80 showing the history of a file transmitted by a user A, who is a user of the information processing apparatus 20, to another user in a personal area or a shared area will be described.

Fig. 15 is a twelfth display example of the information processing system 10. In a case where the CPU 21 receives an instruction to display the history screen 80 while the list screen 50 of the user A is being displayed, the CPU 21 causes the display unit 26 of the information processing apparatus 20 to display the display example shown in Fig. 15.

The history screen 80 shown in Fig. 15 is provided with "destination", "transmission date and time", "file", "status", "update date and time", "message", and "cancel" as an item 81 corresponding to records. The item 81 is not limited to the above type, and other types may be provided.

In the item "destination", the name of the destination to which the user A has transmitted the file is displayed.

In the item "transmission date and time", the transmission date and time when the user A has transmitted the file is displayed. The records on the history screen 80 are displayed in descending order of transmission date and time from the top.

In the item "file", the name of the file transmitted by the user A is displayed.

In the item "status", the status of the file transmitted by the user A is displayed. The status of the file includes "retrieved" indicating that the file transmitted by the user A has been retrieved by another user, and "unretrieved" other than the retrieved file. In a case where the status of the file is "retrieved", "retrieved by another user" is displayed in the corresponding item "status", and in a case where the status of the file is "unretrieved", the corresponding item "status" is displayed as a blank.

In the item "update date and time", the update date and time of the file transmitted by the user A is displayed. In the present exemplary embodiment, as an example, in a case where the file transmitted by the user A has been retrieved by another user, the retrieved date and time is displayed in the corresponding item "update date and time". On the other hand, in a case where the file transmitted by the user A has not been retrieved by another user, the same date and time as the corresponding item "transmission date and time" is displayed in the item "update date and time".

In the item "message", whether or not a message is attached to the file is displayed. In the present exemplary embodiment, as an example, in a case where a message is attached to the file, the icons 17C and 17D are displayed in the corresponding item "message", and in a case where the message is not attached to the file, the corresponding item "message" is displayed as a blank. In the history screen 80 shown in Fig. 15, the mouse pointer 15 is displayed on the icon 17C displayed on the record whose item "destination" is "shared area B".

A check box is displayed in the item "cancel". In the present exemplary embodiment, as an example, in a case where the corresponding item "status" is blank, it is possible to add a check mark to the check box of the corresponding item "cancel" . In a case where a check mark is added to the check box, a confirmation screen (not shown) is displayed, and in a case where an instruction to cancel the transmission of the file is received on the confirmation screen, the file is canceled. In a case where the file is canceled, the file returns to the personal area of user A.

Although Fig. 15 shows four types of records corresponding to the item 81, records other than the above are also displayed on the history screen 80. Further, in the present exemplary embodiment, the number of records displayed on the history screen 80 is, for example, the latest 100 records. Then, on the history screen 80, the displayed records can be rearranged by using the item 81 corresponding to the record.

Fig. 16 is a thirteenth display example of the information processing system 10. The display example shown in Fig. 16 shows a state after the mouse is left-clicked on the icon 17C while the display example shown in Fig. 15 is being displayed. On the history screen 80 shown in Fig. 16, in addition to the display contents in Fig. 15, a message display section 19 is displayed below the icon 17C. Similar to the list screen 50 shown in Fig. 12 and the edit screen 70 shown in Fig. 14, the message display section 19 displays the texts "User A 3/31/2021 15:00:10 Please confirm. Thank you".

As described above, in the present exemplary embodiment, the display mode of the icon 17 on the list screen 50, the edit screen 70, and the history screen 80 is common to the display mode in which the envelope mark is displayed in the round frame (see Figs. 10 to 16). Therefore, according to the present exemplary embodiment, it is possible to easily make a recipient grasp whether or not a message is attached to the transmitted file, as compared with the configuration in which the display mode of the icon 17 on the plurality of screens is different.

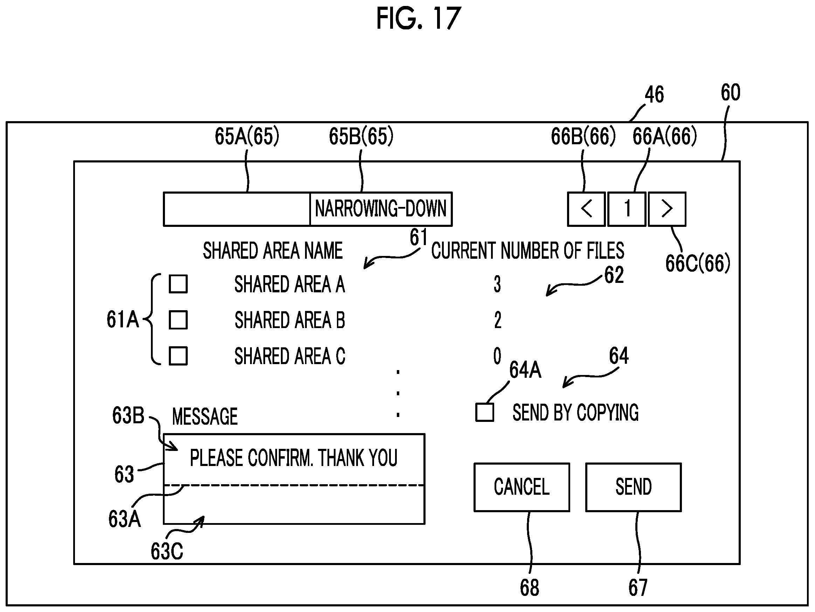

Next, a display example in a case where the attachment of a plurality of messages to the file is received will be described. Fig. 17 is a fourteenth display example of the information processing system 10. The display example shown in Fig. 17 shows a state after the mouse is right-clicked on the thumbnail image 51A while the display example shown in Fig. 12 is being displayed, and then the "shared area" menu of the submenu 54 is left-clicked with the mouse.

The display example shown in Fig. 17 shows the selection screen 60 displayed on the display unit 46 of the information processing apparatus 40 of the user B.

The message input section 63 shown in Fig. 17 is divided into a first area 63B on the upper side of a broken line 63A and a second area 63C on the lower side thereof with the broken line 63A as a boundary.

The first area 63B is the part where the message for which the attachment was previously received is input, and in Fig. 17, the text such as the message "Please confirm. Thank you" that the user A input on the selection screen 60 shown in Fig. 6 is displayed.

The second area 63C is a part that inputs a message to be newly attached to the file. In Fig. 17, the second area 63C is displayed as a blank.

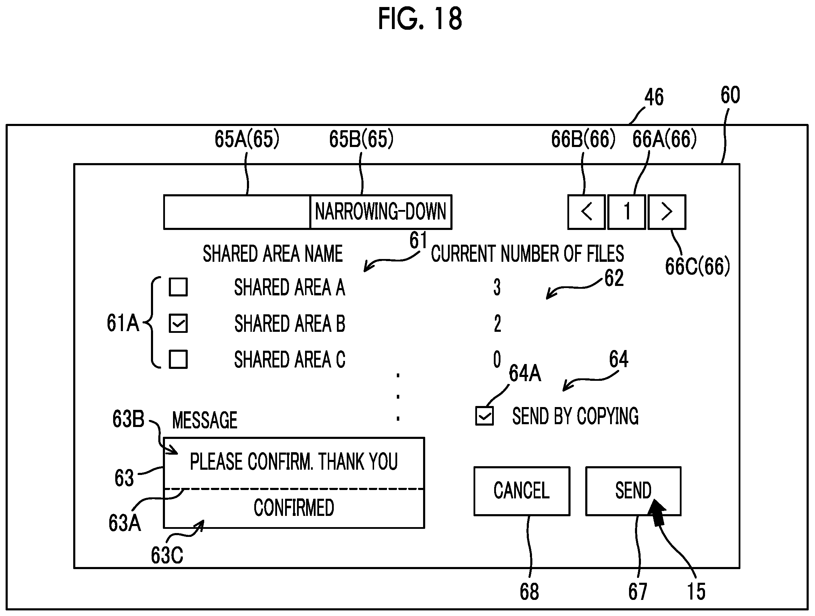

Fig. 18 is a fifteenth display example of the information processing system 10. The display example shown in Fig. 18 shows a state after check marks are added to the check box 61A of the destination selection section 61 and the check box 64A of the copy selection section 64 and a message is input to the second area 63C of the message input section 63 while the display example shown in Fig. 17 is being displayed.

In the selection screen 60 shown in Fig. 18, a check mark is added to the check box 61A corresponding to the shared area B of the destination selection section 61, and as an example, the message "confirmed" is input to the second area 63C of the message input section 63. Further, in the selection screen 60 shown in Fig. 18, the mouse pointer 15 is displayed on the send button 67.

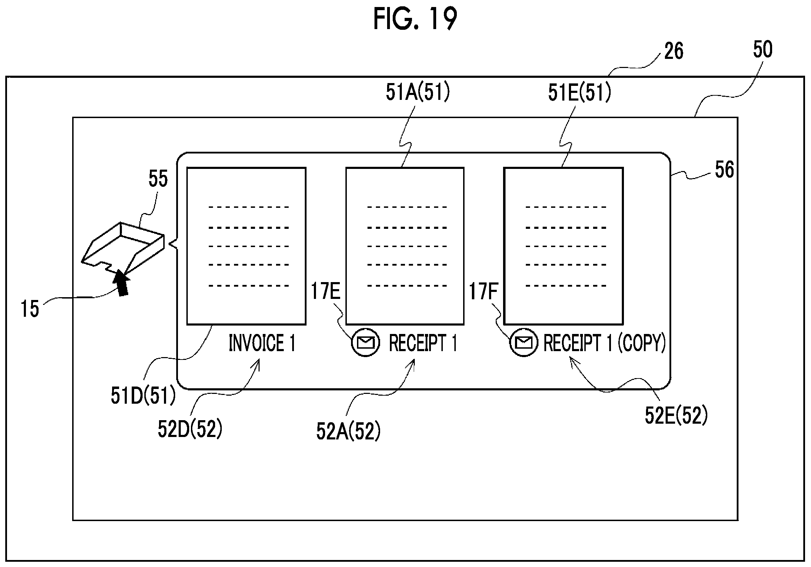

Fig. 19 is a sixteenth display example of the information processing system 10. Hereinafter, as an example, a display example in a case where the user A, who is the user of the information processing apparatus 20, displays the file transmitted to the shared area B by the user B on the selection screen 60 shown in Fig. 18 will be described. In a case where the CPU 21 receives an instruction to display the shared area B on the list screen 50 of the user A after the first application is executed, the CPU 21 causes the display unit 26 of the information processing apparatus 20 to display the display example shown in Fig. 19.

Further, the list screen 50 shown in Fig. 19 shows the state after the mouse pointer 15 is displayed on the virtual tray 55 and the mouse is left-clicked on the virtual tray 55. Then, in the balloon 56 shown in Fig. 19, as file information, thumbnail images 51A, 51D, and 51E, and file name displays 52A, 52D, and 52E indicating the file names corresponding to the thumbnail images 51 are displayed. An icon 17E is displayed below the thumbnail image 51A and on the left side of the file name display 52A, and an icon 17F is displayed below the thumbnail image 51E and on the left side of the file name display 52E.

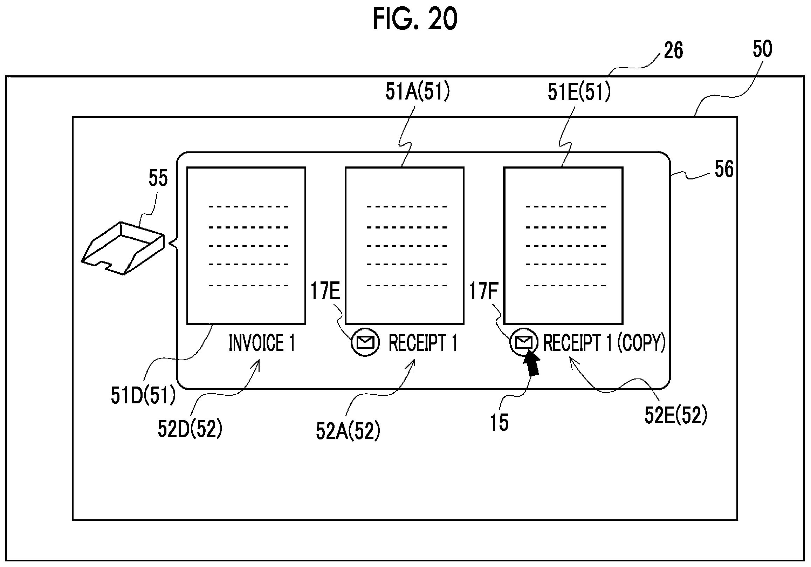

Fig. 20 is a seventeenth display example of the information processing system 10. The display example shown in Fig. 20 shows a state after the position of the mouse pointer 15 is moved from the display example shown in Fig. 19. In the list screen 50 shown in Fig. 20, the mouse pointer 15 is displayed on the icon 17F.

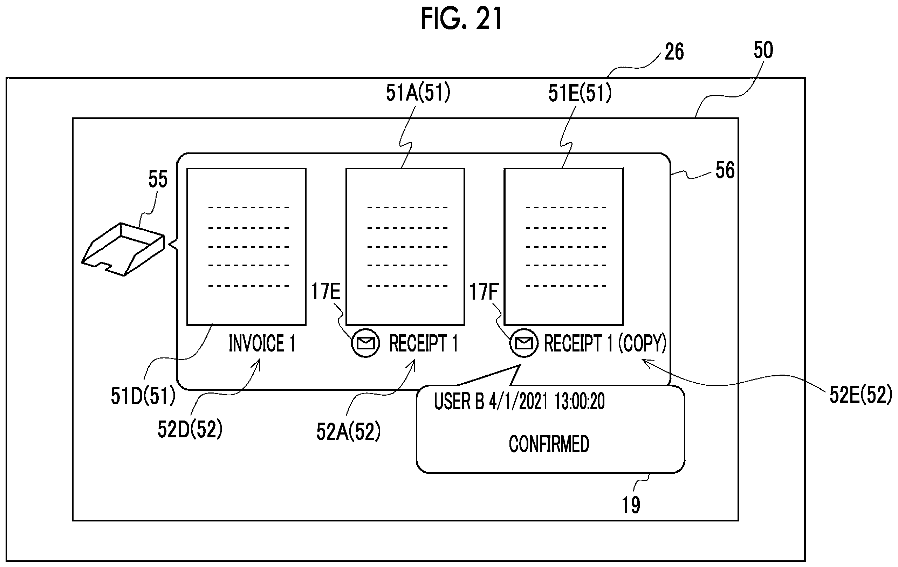

Fig. 21 is an eighteenth display example of the information processing system 10. The display example shown in Fig. 21 shows a state after the icon 17F is left-clicked with the mouse while the display example shown in Fig. 20 is being displayed. On the list screen 50 shown in Fig. 21, in addition to the display contents in Fig. 20, a message display section 19 is displayed below the icon 17F. As an example, the message display section 19 displays the texts "User B 4/1/2021 13:00:20 Confirmed", which is a message with the latest reception time of an input.

As described above, in the present exemplary embodiment, in a case where the attachment of a plurality of messages to the file is received and the selection of the icon 17 is received, the CPUs 21 and 41 display the message with the latest reception time. Therefore, according to the present exemplary embodiment, in a case where a plurality of messages are attached to the file, it is possible to make a recipient grasp the message with the latest reception time in preference to the other messages.

Here, in a case where the attachment of a plurality of messages to the file is received and the selection of the icon 17 is received, the CPUs 21 and 41 display the message with the latest reception time, and hold all the received messages in the storage units 24 and 44. Then, the CPUs 21 and 41 display all the received messages for the file on the selection screen 60, which is an example of a predetermined screen (see Fig. 18). Therefore, according to the present exemplary embodiment, it is possible to make a recipient grasp all the received messages on the selection screen 60.

### (Other)

In the above exemplary embodiment, the full text of the message attached to the file is displayed on the message display section 19 (see Figs. 12 and 21), but in a case where the amount of information of the message attached to the file exceeds a predetermined threshold value, the message is displayed as follows. The case where the amount of information of the message exceeds a predetermined threshold value is, for example, a case where the full text of the message does not fit in the initial size of the frame of the message display section 19 on which the message body or the like is displayed.

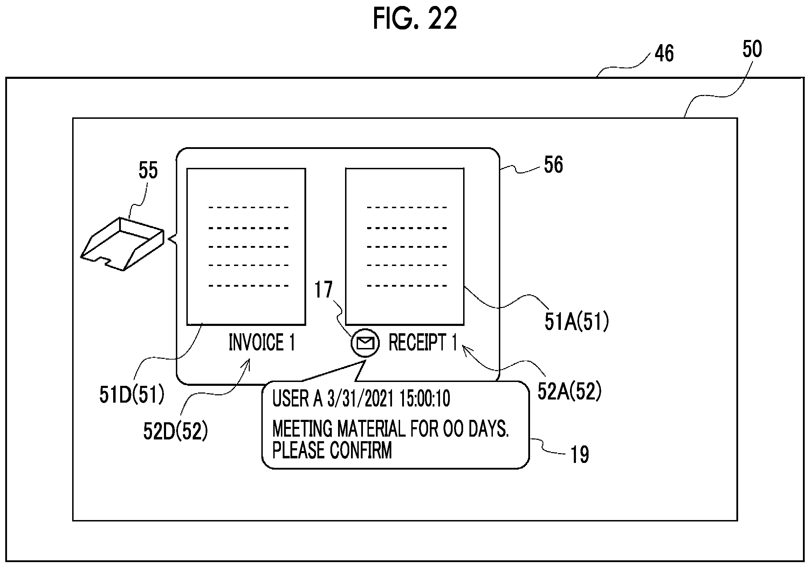

Fig. 22 is a nineteenth display example of the information processing system 10. Similar to the display example shown in Fig. 12, the display example shown in Fig. 22 shows a state after the icon 17 is left-clicked with the mouse. However, the display example shown in Fig. 22 differs from the display example shown in Fig. 12 in that the message input to the message input section 63 of the selection screen 60 is "Meeting material for OO days. Please confirm. Thank you".

The message display section 19 shown in Fig. 22 displays the texts "User A 3/31/2021 15:00:10 Meeting material for OO days. Please confirm". That is, the message display section 19 does not display the full text of the message input to the message input section 63 of the selection screen 60.

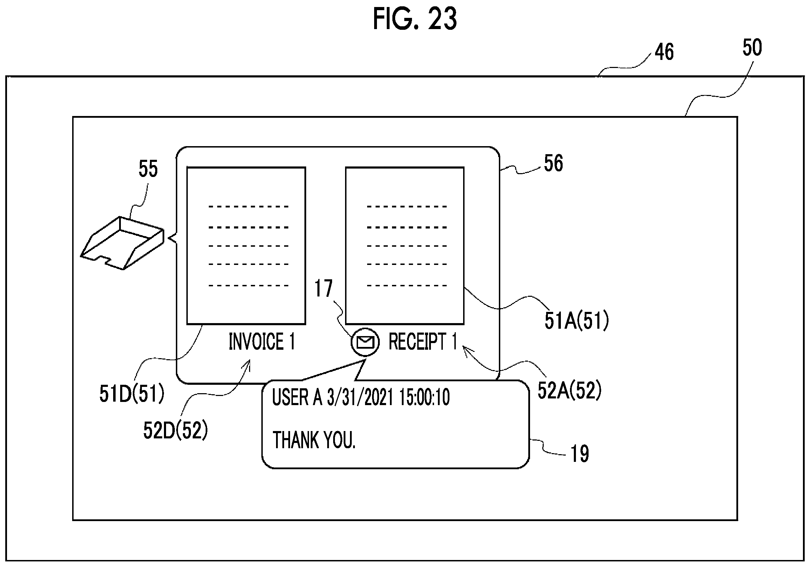

Fig. 23 is a twentieth display example of the information processing system 10. The display example shown in Fig. 23 shows a state after a scroll operation is performed by using the mouse on the message display section 19 while the display example shown in Fig. 22 is being displayed. The message display section 19 displays the texts "User A 3/31/2021 15:00:10 Thank you". That is, the message display section 19 displays the content following the message body displayed on the message display section 19 shown in Fig. 22.

As described above, in a case where the amount of information of the message attached to the file exceeds a predetermined threshold value, the full text of the message can be confirmed by performing a scroll operation on the message display section 19.

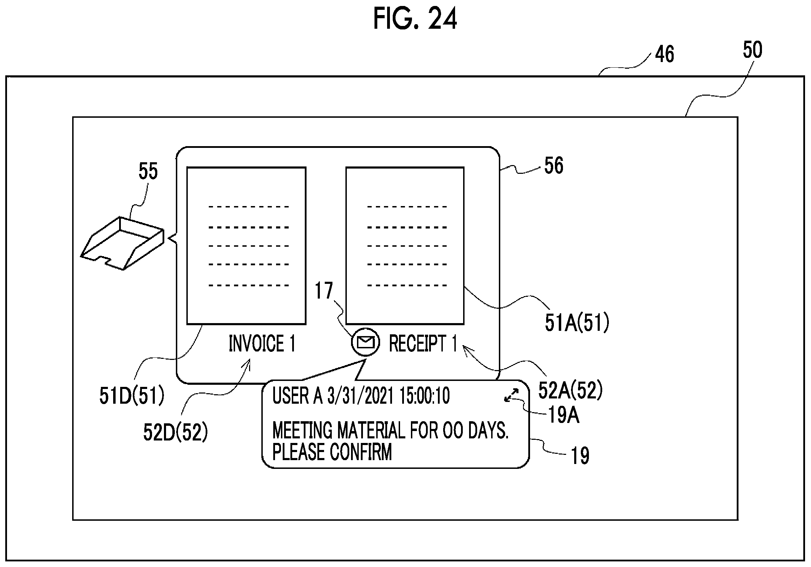

Fig. 24 is a twenty-first display example of the information processing system 10. Similar to the display example shown in Fig. 22, in the display example shown in Fig. 24, the message display section 19 displays the texts "User A 3/31/2021 15:00:10 Meeting material for OO days. Please confirm". However, the message display section 19 shown in Fig. 24 differs from the display example shown in Fig. 22 in that an enlargement button 19A for enlarging the size of the frame of the message display section 19 is displayed in the upper right portion of the frame.

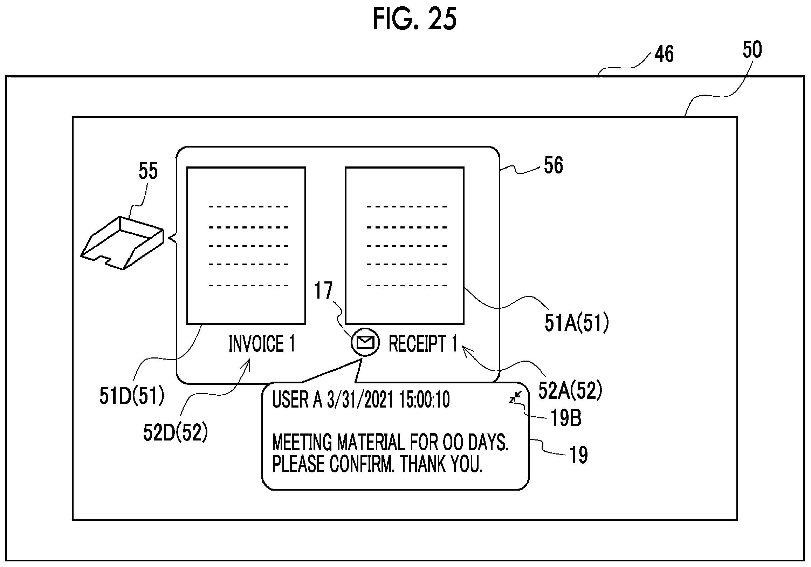

Fig. 25 is a twenty-second display example of the information processing system 10. The display example shown in Fig. 25 shows a state after the enlargement button 19A is left-clicked with the mouse while the display example shown in Fig. 24 is being displayed.

The size of the frame of the message display section 19 shown in Fig. 25 is larger than the size of the frame of the message display section 19 shown in Fig. 24, and in the frame, the texts "User A 3/31/2021 15:00:10 Meeting material for OO days. Please confirm. Thank you" are displayed. That is, the message display section 19 shown in Fig. 25 displays the full text of the message input to the message input section 63 of the selection screen 60.

The message display section 19 shown in Fig. 25 displays a reduction button 19B for reducing the size of the frame of the message display section 19 to the initial size shown in Fig. 24 in the upper right portion of the frame.

As described above, in a case where the amount of information of the message attached to the file exceeds a predetermined threshold value, the full text of the message can be confirmed by increasing the size of the frame of the message display section 19.

In the above exemplary embodiment, the context menu 53 was displayed on the list screen 50, and in a case where the mouse was left-clicked on either the "personal area" or the "shared area", which is the submenu 54 of the "send" menu of the context menu 53, the selection screen 60 was displayed (see Figs. 4 and 5). However, the method of screen transition from the list screen 50 to the selection screen 60 is not limited to the above.

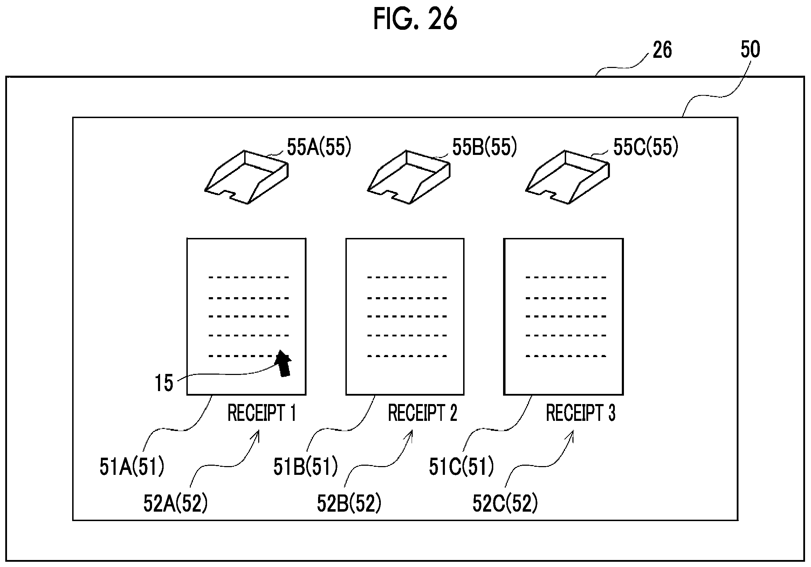

Fig. 26 is a twenty-third display example of the information processing system 10. The display example shown in Fig. 26 shows another example of the list screen 50. On the list screen 50 shown in Fig. 26, as an example, and thumbnail images 51A, 51B, and 51C, file name displays 52A, 52B, and 52C corresponding to the thumbnail images 51, and virtual trays 55A, 55B, and 55C corresponding to each personal area or each shared area which is the destination of the file are displayed. Further, the mouse pointer 15 is displayed on the thumbnail image 51A. As an example, it is assumed that the virtual tray 55A shown in Fig. 26 corresponds to the "shared area A", the virtual tray 55B corresponds to the "shared area B", and the virtual tray 55C corresponds to the "shared area C".

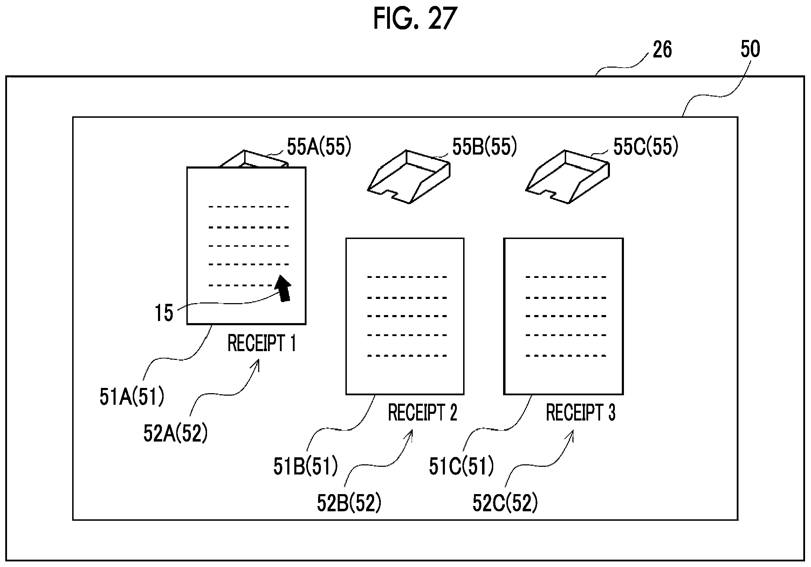

Fig. 27 is a twenty-fourth display example of the information processing system 10. The display example shown in Fig. 27 shows a state after the thumbnail image 51A is moved to a position that overlaps the virtual tray 55A by left-clicking the mouse on the thumbnail image 51A while the display example shown in Fig. 26 is being displayed.

Here, the CPU 21 may make screen transition from the list screen 50 to the selection screen 60 in a case where any thumbnail image 51 is dragged and dropped on any virtual tray 55 on the list screen 50. As an example, in a case where the left mouse click is released while the thumbnail image 51A shown in Fig. 27 is moved onto the virtual tray 55A, the CPU 21 displays the selection screen 60 in which the destination of the file of the destination selection section 61 (see Fig. 5) is selected in the "shared area A".

In the above exemplary embodiment, although an example in which one file to be transmitted is selected on the list screen 50 has been described, the number of files that can be selected on the list screen 50 is not limited to one, and a plurality of files can be selected.

In the above exemplary embodiment, although "thumbnail display" in which the thumbnail image 51 and the file name display 52 are displayed as the file information on the list screen 50 has been described, the display content of the list screen 50 is not limited to the "thumbnail display". As an example, the list screen 50 may be switchable between "thumbnail display" and "list display" in which items such as "file name" and "file creator" are provided as file information, and records corresponding to each item are displayed. Even in a case where the list screen 50 is displayed in the "list display", the icon 17 is displayed in the file to which the message is attached.

In the above exemplary embodiment, the "personal area" and the "shared area" are provided as a plurality of destinations of the file on the list screen 50, but other destinations may be included. As an example, in addition to the "personal area" and "shared area" used in a case of requesting another user to work on files, a "movement area" may be provided to simply move the file to another location without the purpose of having another user perform the work.

In the above exemplary embodiment, an example in which the message is input to the message input section 63 on the selection screen 60 has been described, but the file can be transmitted even though the message is not input to the message input section 63.

In the above exemplary embodiment, the information processing system 10 may be provided with a lock function that limits the file editing work. Then, for the file for which the lock function is turned on, only the user who has turned on the lock function can transmit the file on the selection screen 60. Further, the specification may be such that even a user who has turned on the lock function may not be able to transmit the original of the file, and may be able to transmit the file only by copying.

In the above exemplary embodiment, the information processing system 10 may be provided with an instantaneous enlargement function for instantaneously enlarging and displaying the thumbnail image 51. As an example, the specification may be such that in a case where the mouse is over on the thumbnail image 51 displayed on the list screen 50, the thumbnail image 51 is instantaneously enlarged and displayed. Further, in a case where there is an icon 17 associated with the thumbnail image 51 and the thumbnail image 51 is enlarged and displayed by the instantaneous enlargement function, the icon 17 is displayed in association with the enlarged thumbnail image 51.

In the above exemplary embodiment, a message is displayed in a case where the icon 17 is left-clicked with the mouse as a "case where the selection of the icon 17 is received", but a "case where the selection of the icon 17 is received" is not limited thereto. As an example, the case where the mouse is over on the icon 17 may be regarded as "the case where the selection of the icon 17 is received".

In addition, as a case where the selection of the icon 17 is received, in a case where two types of a "case where the icon 17 is left-clicked with the mouse" and a "case where the mouse is over on the icon 17" are provided, the method for displaying the message may be different for each operation.

As an example, in a case where the icon 17 is left-clicked with the mouse, the specification may be such that the message once displayed is continuously displayed until the part other than the icon 17 or the message display section 19 is left-clicked with the mouse.

As an example, in a case where the mouse is over on the icon 17, the specification may be such that the message once displayed is continuously displayed until the mouse pointer 15 is released from the icon 17.

As an example, in a case where the icon 17 is left-clicked with the mouse while the mouse is over on the icon 17 and a message is displayed, the specification may be such that the message once displayed is continuously displayed until the mouse pointer 15 is released from the icon 17 after the icon 17 is left-clicked again with the mouse.

In the above exemplary embodiment, in the message input section 63 shown in Fig. 17, although the message for which the attachment has been previously received is displayed in the first area 63B on the upper side of the broken line 63A, the method for displaying the message for which the attachment has been previously received is not limited thereto. As an example, the specification may be such that the message for which the attachment has been previously received is additionally displayed at the end of the message for which the attachment has been newly received on the selection screen 60.

Further, on the selection screen 60, in a case where the message for which the attachment has been previously received is displayed on the message input section 63, it may be possible to select whether or not to delete the message.

In the above exemplary embodiment, the information processing apparatus 20 and the information processing apparatus 40 are designated as "personal computers", the information processing apparatus 20 and the information processing apparatus 40 execute display processing, and the execution result of the display processing is displayed. However, the configuration of the information processing apparatus is not limited thereto. As an example, the information processing apparatus may be a "server computer", and the information processing apparatus may be configured to execute only display processing. In this case, the execution result of the display processing is displayed on each user terminal such as a personal computer other than the information processing apparatus.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

20, 40: information processing apparatus
21, 41: CPU (example of processor)

## Claims

1. An information processing apparatus (20, 40), comprising:
a processor (21, 41) configured to:
in a case where a file is received by a user of the information processing apparatus (20, 40) from another user, determine whether a message is attached to the file; and
in a case where the message is determined to be attached to the file, display a first image showing file information of the file and a second image indicating that the message is attached to the file;
the information processing apparatus (20, 40) being **characterized in that** the processor (21, 41) is further configured to:
in a case where a selection of the second image is received, display a content of the message, wherein before and after the content of the message is displayed in response to the selection of the second image, the first image is kept being displayed at a same position; and
in a case where a selection of the first image is selected, display the content of the file corresponding to the first image without displaying the content of the message.

2. The information processing apparatus (20, 40) according to claim 1, wherein the processor (21, 41) is configured to:
in a case where an attachment of a plurality of the messages to the file is received and the selection of the second image is received, display the message with the latest reception time.

3. The information processing apparatus (20, 40) according to claim 2, wherein the processor is configured to:
in a case where the attachment of the plurality of messages to the file is received, hold all the received messages; and
display all the received messages for the file on a predetermined screen (50, 60, 70) of a display unit (26, 46) .

4. The information processing apparatus (20, 40) according to any one of claims 1 to 3, wherein the processor (21, 41) is configured to:
display the second image on a plurality of screens (50, 60, 70) of a display unit (26, 46); and
make a display mode of the second image on the plurality of screens (50, 60, 70) common.

5. The information processing apparatus (20, 40) according to claim 4,
wherein the plurality of screens (50, 60, 70) include an edit screen (70) capable of editing the file.

6. The information processing apparatus (20, 40) according to claim 5, wherein the processor (21, 41) is configured to:
in a case where the edit screen (70) is displayed, display the message.

7. The information processing apparatus (20, 40) according to any one of claims 1 to 6, wherein the processor (21, 41) is configured to:
in a case where the selection of the second image is received, display the message at a position that does not overlap the first image.

8. An information processing program causing a computer to execute a process comprising:
in a case where a file is received by a user of an information processing apparatus (20, 40) from another user, determining whether a message is attached to the file; and
displaying, in a case where a message is determined to be attached to the file, a first image showing file information of the file and a second image indicating that the message is attached to the file;
the information processing program being **characterized in that** the process further comprises:
displaying a content of the message in a case where a selection of the second image is received, wherein before and after the content of the message is displayed in response to the selection of the second image, the first image is kept being displayed at a same position; and
in a case where a selection of the first image is selected, displaying the content of the file corresponding to the first image without displaying the content of the message.

9. An information processing method comprising:
in a case where a file is received by a user of an information processing apparatus (20, 40) from another user, determining whether a message is attached to the file; and
displaying, in a case where a message is determined to be attached to the file, a first image showing file information of the file and a second image indicating that the message is attached to the file;
the information processing method being **characterized in** further comprising:
displaying a content of the message in a case where a selection of the second image is received, wherein before and after the content of the message is displayed in response to the selection of the second image, the first image is kept being displayed at a same position; and
in a case where a selection of the first image is selected, displaying the content of the file corresponding to the first image without displaying the content of the message.

## Patentansprüche

1. Informationsverarbeitungsvorrichtung (20, 40), umfassend:
einen Prozessor (21, 41), der so konfiguriert ist, dass er:
in einem Fall, in dem eine Datei von einem Benutzer der
Informationsverarbeitungsvorrichtung (20, 40) von einem anderen Benutzer empfangen wird, bestimmt, ob eine Nachricht an die Datei angehängt ist; und
in einem Fall, in dem bestimmt wird, dass die Nachricht an die Datei angehängt ist, ein erstes Bild, das Dateiinformationen der Datei zeigt, und ein zweites Bild, das angibt,
dass die Nachricht an die Datei angehängt ist, anzeigt;
wobei die Informationsverarbeitungsvorrichtung (20, 40) **dadurch gekennzeichnet ist,**
**dass** der Prozessor (21, 41) ferner konfiguriert ist, dass er:
in einem Fall, in dem eine Auswahl des zweiten Bildes empfangen wird, einen Inhalt der Nachricht anzeigt, wobei bevor und nachdem der Inhalt der Nachricht als Reaktion auf die Auswahl des zweiten Bildes angezeigt wird, das erste Bild an einer gleichen Position weiter angezeigt wird; und
in einem Fall, in dem eine Auswahl des ersten Bildes ausgewählt wird, den Inhalt der Datei, der dem ersten Bild entspricht, ohne den Inhalt der Nachricht anzuzeigen, anzeigt.

2. Informationsverarbeitungsvorrichtung (20, 40) nach Anspruch 1, wobei der Prozessor (21, 41) so konfiguriert ist, dass er:
in einem Fall, in dem ein Anhang von mehreren der Nachrichten an die Datei empfangen wird und die Auswahl des zweiten Bildes empfangen wird, die Nachricht mit der spätesten Empfangszeit anzeigt.

3. Informationsverarbeitungsvorrichtung (20, 40) nach Anspruch 2, wobei der Prozessor so konfiguriert ist, dass er:
in einem Fall, in dem der Anhang der mehreren Nachrichten an die Datei empfangen wird, alle empfangenen Nachrichten hält; und
alle empfangenen Nachrichten für die Datei auf einem vorbestimmten Bildschirm (50, 60, 70) einer Anzeigeeinheit (26, 46) anzeigt.

4. Informationsverarbeitungsvorrichtung (20, 40) nach einem der Ansprüche 1 bis 3, wobei der Prozessor (21, 41) so konfiguriert ist, dass er:
das zweite Bild auf mehreren Bildschirmen (50, 60, 70) einer Anzeigeeinheit (26, 46) anzeigt; und
einen Anzeigemodus des zweiten Bildes auf den mehreren Bildschirmen (50, 60, 70) gemeinsam macht.

5. Informationsverarbeitungsvorrichtung (20, 40) nach Anspruch 4,
wobei die mehreren Bildschirme (50, 60, 70) einen Bearbeitungsbildschirm (70), der die Datei bearbeiten kann, enthalten.

6. Informationsverarbeitungsvorrichtung (20, 40) nach Anspruch 5, wobei der Prozessor (21, 41) so konfiguriert ist, dass er:
in einem Fall, in dem der Bearbeitungsbildschirm (70) angezeigt wird, die Nachricht anzeigt.

7. Informationsverarbeitungsvorrichtung (20, 40) nach einem der Ansprüche 1 bis 6, wobei der Prozessor (21, 41) so konfiguriert ist, dass er:
in einem Fall, in dem die Auswahl des zweiten Bildes empfangen wird, die Nachricht an einer Position, die das erste Bild nicht überlappt, anzeigt.

8. Informationsverarbeitungsprogramm, das einen Computer veranlasst, einen Prozess auszuführen, der umfasst:
in einem Fall, in dem eine Datei von einem Benutzer einer
Informationsverarbeitungsvorrichtung (20, 40) von einem anderen Benutzer empfangen wird, Bestimmen, ob eine Nachricht an die Datei angehängt ist; und
Anzeigen, in einem Fall, in dem bestimmt wird, dass eine Nachricht an die Datei angehängt ist, eines ersten Bildes, das Dateiinformationen der Datei zeigt, und eines zweiten Bildes, das angibt, dass die Nachricht an die Datei angehängt ist;
wobei das Informationsverarbeitungsprogramm **dadurch gekennzeichnet ist, dass** der Prozess ferner umfasst:
Anzeigen eines Inhalts der Nachricht in einem Fall, in dem eine Auswahl des zweiten Bildes empfangen wird, wobei bevor und nachdem der Inhalt der Nachricht als Reaktion auf die Auswahl des zweiten Bildes angezeigt wird, das erste Bild an einer gleichen Position weiter angezeigt wird; und
in einem Fall, in dem eine Auswahl des ersten Bildes ausgewählt wird, Anzeigen des Inhalts der Datei, der dem ersten Bild entspricht, ohne den Inhalt der Nachricht anzuzeigen.

9. Informationsverarbeitungsverfahren, umfassend:
in einem Fall, in dem eine Datei von einem Benutzer einer Informationsverarbeitungsvorrichtung (20, 40) von einem anderen Benutzer empfangen wird, Bestimmen, ob eine Nachricht an die Datei angehängt ist; und
Anzeigen, in einem Fall, in dem bestimmt wird, dass eine Nachricht an die Datei angehängt ist, eines ersten Bildes, das Dateiinformationen der Datei zeigt, und eines zweiten Bildes, das angibt, dass die Nachricht an die Datei angehängt ist;
wobei das Informationsverarbeitungsverfahren **dadurch gekennzeichnet ist, dass** es ferner umfasst:
Anzeigen eines Inhalts der Nachricht in einem Fall, in dem eine Auswahl des zweiten Bildes empfangen wird, wobei bevor und nachdem der Inhalt der Nachricht als Reaktion auf die Auswahl des zweiten Bildes angezeigt wird, das erste Bild an einer gleichen Position weiter angezeigt wird; und
in einem Fall, in dem eine Auswahl des ersten Bildes ausgewählt wird, Anzeigen des Inhalts der Datei, der dem ersten Bild entspricht, ohne den Inhalt der Nachricht anzuzeigen.

## Revendications

1. Appareil de traitement d'informations (20, 40), comprenant :
un processeur (21, 41) configuré pour :
dans un cas où un fichier est reçu par un utilisateur de l'appareil de traitement d'informations (20, 40) d'un autre utilisateur, déterminer si un message est attaché au fichier ; et
dans un cas où le message est déterminé comme étant attaché au fichier, afficher une première image montrant des informations de fichier du fichier et une deuxième image indiquant que le message est attaché au fichier ;
l'appareil de traitement d'informations (20, 40) étant **caractérisé en ce que** le processeur (21, 41) est en outre configuré pour :
dans un cas où une sélection de la deuxième image est reçue, afficher un contenu du message, dans lequel avant et après que le contenu du message est affiché en réponse à la sélection de la deuxième image, la première image est maintenue en cours d'affichage à une même position ; et
dans un cas où une sélection de la première image est sélectionnée, afficher le contenu du fichier correspondant à la première image sans afficher le contenu du message.

2. Appareil de traitement d'informations (20, 40) selon la revendication 1, dans lequel le processeur (21, 41) est configuré pour :
dans un cas où une pièce jointe d'une pluralité de messages au fichier est reçue et la sélection de la deuxième image est reçue, afficher le message avec le temps de réception le plus récent.

3. Appareil de traitement d'informations (20, 40) selon la revendication 2, dans lequel le processeur est configuré pour :
dans un cas où la pièce jointe de la pluralité de messages au fichier est reçue, conserver tous les messages reçus ; et
afficher tous les messages reçus pour le fichier sur un écran prédéterminé (50, 60, 70) d'une unité d'affichage (26, 46).

4. Appareil de traitement d'informations (20, 40) selon l'une quelconque des revendications 1 à 3, dans lequel le processeur (21, 41) est configuré pour :
afficher la deuxième image sur une pluralité d'écrans (50, 60, 70) d'une unité d'affichage (26, 46) ; et
rendre commun un mode d'affichage de la deuxième image sur la pluralité d'écrans (50, 60, 70).

5. Appareil de traitement d'informations (20, 40) selon la revendication 4,
dans lequel la pluralité d'écrans (50, 60, 70) inclut un écran d'édition (70) capable d'éditer le fichier.

6. Appareil de traitement d'informations (20, 40) selon la revendication 5, dans lequel le processeur (21, 41) est configuré pour :
dans un cas où l'écran d'édition (70) est affiché, afficher le message.

7. Appareil de traitement d'informations (20, 40) selon l'une quelconque des revendications 1 à 6, dans lequel le processeur (21, 41) est configuré pour :
dans un cas où la sélection de la deuxième image est reçue, afficher le message à une position qui ne chevauche pas la première image.

8. Programme de traitement d'informations amenant un ordinateur à exécuter un processus comprenant :
dans un cas où un fichier est reçu par un utilisateur d'un appareil de traitement d'informations (20, 40) d'un autre utilisateur, déterminer si un message est attaché au fichier ; et
afficher, dans un cas où un message est déterminé comme étant attaché au fichier, une première image montrant des informations de fichier du fichier et une deuxième image indiquant que le message est attaché au fichier ;
le programme de traitement d'informations étant **caractérisé en ce que** le processus comprend en outre :
afficher un contenu du message dans un cas où une sélection de la deuxième image est reçue, dans lequel avant et après que le contenu du message est affiché en réponse à la sélection de la deuxième image, la première image est maintenue en cours d'affichage à une même position ; et
dans un cas où une sélection de la première image est sélectionnée, afficher le contenu du fichier correspondant à la première image sans afficher le contenu du message.

9. Procédé de traitement d'informations comprenant :
dans un cas où un fichier est reçu par un utilisateur d'un appareil de traitement d'informations (20, 40) d'un autre utilisateur, déterminer si un message est attaché au fichier ; et
afficher, dans un cas où un message est déterminé comme étant attaché au fichier, une première image montrant des informations de fichier du fichier et une deuxième image indiquant que le message est attaché au fichier ;
le procédé de traitement d'informations étant caractérisé en comprenant en outre :
afficher un contenu du message dans un cas où une sélection de la deuxième image est reçue, dans lequel avant et après que le contenu du message est affiché en réponse à la sélection de la deuxième image, la première image est maintenue en cours d'affichage à une même position ; et
dans un cas où une sélection de la première image est sélectionnée, afficher le contenu du fichier correspondant à la première image sans afficher le contenu du message.
